# EUROPEAN PATENT APPLICATION

(11) **EP 4 549 510 A1**
(43) Date of publication of application: **07.05.2025**
(21) Application number: 23831569.1
(22) Date of filing: 29.06.2023
(51) Int. Cl.: C08L 27/12, C08K 3/22, F16J 15/10

(54) **FLUORORUBBER COMPOSITION**

(30) Priority: 29.06.2022 JP 2022104504
(71) Applicant: NOK Corporation, Minato-ku Tokyo 105-8585 (JP)
(72) Inventor: SHIMAMURA Takuto, Fujisawa-shi, Kanagawa 251-0042 (JP)
(74) Representative: Kraus & Lederer PartGmbB
(86) International application number: PCT/JP2023/024146
(87) International publication number: WO 2024/005130

(57) **Abstract**

A fluororubber composition in which fluororubber is compounded with triiron tetraoxide having a BET specific surface area of 4.0 m²/g or less at a ratio of 7.0 vol% or more as a volume fraction. A crosslinked product obtained by the fluororubber composition according to the present invention can be detected 1 mm pieces thereof by using a metal detector ND-840, produced by Nissin Electronics Co., Ltd., under the detection sensitivity conditions (Fe: 0.6 in diameter, SUS: 1.5 in diameter). Further, the compression set of the crosslinked product using an O-ring at 175°C after 70 hours is 21% or less, and thus the crosslinked product can be effectively used for gaskets, O-rings, and the like for food production facilities, food machinery, automobiles, etc.

## Description

### TECHNICAL FIELD

The present invention relates to a fluororubber composition. More particularly, the present invention relates to a fluororubber composition that is suitably used as a seal member molding material for use in food production facilities etc.

### BACKGROUND ART

In the field of food production facilities, the functions required for seal members are heat resistance, water resistance, and oil resistance, as well as compliance with various laws and regulations, such as the Water Supply Act and the Food Sanitation Act. In particular, fluororubber is applied to members that are used in severe environments.

On the other hand, if O-rings and packings used in the food production process are damaged, rubber pieces may enter the food. Particularly in rubber compounding using carbon black and white carbon, which are commonly used as fillers, the situation is such that filler leakage cannot be prevented only by using a metal detector in the process.

As a counter measures for this, Patent Documents 1 and 2 have proposed O-rings for food processing plants to which metal oxide (black iron oxide) is added. However, no information is provided regarding product functions or material properties. O-rings used in food production facilities are required to be made of rubber materials that can be detected by a metal detector even with tiny pieces, and also to have excellent compression set resistance characteristics that affect the product life.

### PRIOR ART DOCUMENT

### PATENT DOCUMENT

Patent Document 1 : JP-U-3137050
Patent Document 2 : JP-U-3135558

### OUTLINE OF THE INVENTION

### PROBLEM TO BE SOLVED BY THE INVENTION

An object of the present invention is to provide a fluororubber composition that allows detection by a metal detector even if tiny rubber pieces are contained in with food production lines and other production facilities, and that has excellent compression set resistance characteristics.

### MEANS FOR SOLVING THE PROBLEM

The above object of the present invention can be achieved by a fluororubber composition in which fluororubber is compounded with triiron tetraoxide having a BET specific surface area of 4.0 m²/g or less at a ratio of 7.0 vol% or more as a volume fraction.

### EFFECT OF THE INVENTION

A crosslinked product obtained from the fluororubber composition according to the present invention can be detected by a metal detector even if it is tiny pieces, specifically pieces of 1 mm or less, and further has excellent compression set resistance characteristics.

### EMBODIMENTS FOR CARRYING OUT THE INVENTION

The fluororubber used herein may be either a polyol-vulcanizable fluororubber or a peroxide-crosslinkable fluororubber, however, a peroxide-crosslinkable fluororubber is preferably used.

Examples of the polyol-vulcanizable fluororubber include homopolymer or atlernating copolymers of vinylidene fluoride, hexafluoropropene, pentafluoropropene, trifluoroethylene, trifluorochloroethylene, tetrafluoroethylene, vinyl fluoride, perfluoroacrylic acid ester, perfluoroalkyl acrylate, perfluoro(methyl vinyl ether), perfluoro(ethyl vinyl ether), perfluoro(propyl vinyl ether) etc., or copolymers thereof with propylene. Preferably, vinylidene fluoride-hexafluoropropene copolymer, vinylidene fluoride-hexafluoropropene-tetrafluoroethylene terpolymer, tetrafluoroethylene-propylene copolymer, and the like are used. In practice, commercially available polyol-vulcanizable fluororubber can be generally used as it is.

The fluororubber that can be crosslinked with peroxide (peroxide-crosslinkable fluororubber) may be any fluorine-containing elastomer that has a fluorine content of 63 to 71 wt.% and a Mooney viscosity ML₁₊₁₀ (121°C) of 20 to 100, and that contains iodine and/or bromine as a crosslinking site in the molecule; and the following copolymer elastomers are preferably used.
- A copolymer elastomer having a copolymerization composition of about 50 to 80 mol% of vinylidene fluoride, about 15 to 50 mol% of hexafluoropropene, and about 30 to 0 mol% of tetrafluoroethylene, into which an iodine and/or bromine group is introduced.

In practice, Viton GAL200S, GBL200S, GBL600S, GF200S, and GF600S produced by Du Pont, Tecnoflon P457, P757, P459, and P952 produced by Solvay Specialty Polymers Japan, DAI-EL G952, G901, G902, G912, and G801 produced by Daikin Industries, Ltd., and the like can be used.
- A copolymer elastomer having a copolymerization composition of about 50 to 85 mol% of vinylidene fluoride, about 5 to 50 mol% of perfluorovinyl ether represented by the general formula: CF₂=CFORf (Rf: a perfluoroalkyl group having 1 to 10 carbon atoms, preferably a perfluoromethyl group or a perfluorooxyalkyl group having one or more ether bonds in the carbon chain), and about 50 to 0 mol% of tetrafluoroethylene, into which an iodine and/or bromine group is introduced.

In practice, Viton GLT200S, GLT600S, GBLT200S, GBLT600S, GFLT200S, and GFLT600S produced by Du Pont, Tecnoflon PL455, PL855, PL557, PL458, and PL958 produced by Solvay Specialty Polymers Japan, DAI-EL LT302 and LT301 produced by Daikin Industries, Ltd., and the like can be used as they are.

The introduction of an iodine and/or bromine group for enabling peroxide crosslinking of the fluororubber can be carried out by a copolymerization reaction in the presence of an iodine and/or bromine group-containing saturated or unsaturated compound.

When a bromine and/or iodine group is contained as a side chain of a fluorine-containing copolymer, usable examples of copolymer include copolymer of crosslinking site-forming monomer such as perfluoro(2-bromoethyl vinyl ether), 3,3,4,4-tetrafluoro-4-bromo-1-butene, 2-bromo-1,1-difluoroethylene, bromotrifluoroethylene, perfluoro(2-iodoethyl vinyl ether), iodotrifluoroethylene.

When an iodine and/or bromine group is contained as the terminal group of a fluorine-containing copolymer, a fluoroalkylene compound halogenated at both ends represented by the general formula: X₁CₙF₂ₙX₂ (X₁: F, Br, or I; X₂: Br or I; and n: 1 to 12) is used. In terms of the balance of reactivity and handling, copolymers, wherein n is 1 to 6, containing an iodine and/or bromine group derived from 1-bromoperfluoroethane, 1-bromoperfluoropropane, 1-bromoperfluorobutane, 1-bromoperfluoropentane, 1-bromoperfluorohexane, 1-iodoperfluoroethane, 1-iodoperfluoropropane, 1-iodoperfluorobutane, 1-iodoperfluoropentane, and 1-iodoperfluorohexane are preferably used.

Moreover, when X₁ and X₂ are I and/or Br, a crosslinking site can be introduced into the terminal position of a fluorine-containing copolymer. Examples of such a compound include 1-bromo-2-iodotetrafluoroethane, 1-bromo-3-iodoperfluoropropane, 1-bromo-4-iodoperfluorobutane, 2-bromo-3-iodoperfluorobutane, monobromomonoiodoperfluoropentane, monobromomonoiodoperfluoro-n-hexane, 1,2-dibromoperfluoroethane, 1,3-dibromoperfluoropropane, 1,4-dibromoperfluorobutane, 1,5-dibromoperfluoropentane, 1,6-dibromoperfluorohexane, 1,2-diiodoperfluoroethane, 1,3-diiodoperfluoropropane, 1,4-diiodoperfluorobutane, 1,5-diiodoperfluoropentane, 1,6-diiodoperfluorohexane, and the like. These compounds can also be used as chain transfer agents.

The fluororubber is compounded with triiron tetraoxide Fe₃O₄ having a BET specific surface area of 4.0 m²/g or less, preferably 3.0 m²/g or less, more preferably 2.5 m²/g or less, at a ratio of 7.0 vol% or more, preferably 8.0 vol% or more, as a volume fraction. 1 mm pieces of a crosslinked product obtained by this compounding can be detected by using a metal detector ND-840, produced by Nissin Electronics Co., Ltd., under the detection sensitivity conditions (Fe: 0.6 in diameter, stainless steel SUS: 1.5 in diameter). Further, the compression set using an O-ring at 175°C after 70 hours is 21% or less. Here, triiron tetraoxide Fe₃O₄ having a BET specific surface area of greater than this range or diiron trioxide Fe₂O₃ is used, desired compression set resistance characteristics cannot be ensured. Further, if the volume fraction is less than this range for compounding, it becomes difficult to detect metal. The volume fraction is calculated taking into consideration the specific gravity of the fluororubber and Fe₃O₄ used.

When a polyol-vulcanizable fluororubber is used as the fluororubber, a polyol-based vulcanizing agent is used preferably in combination with a vulcanization accelerator. When a peroxide-crosslinkable fluororubber is used as the fluororubber, an organic peroxide crosslinking agent is used preferably in combination with a polyfunctional unsaturated compound.

Examples of the polyol-based vulcanizing agent for use as a vulcanizing agent for the polyol-vulcanizable fluororubber include 2,2-bis(4-hydroxyphenyl)propane [bisphenol A], 2,2-bis(4-hydroxyphenyl)perfluoropropane [bisphenol AF], bis(4-hydroxyphenyl)sulfone [bisphenol S], 2,2-bis(4-hydroxyphenyl)methane [bisphenol F], bisphenol A-bis(diphenylphosphate), 4,4 ' -dihydroxydiphenyl, 2,2-bis(4-hydroxyphenyl)butane, and the like. Preferably, bisphenol A, bisphenol AF, and the like are used. They can be in the form of alkali metal salts or alkaline earth metal salts. The polyol-based vulcanizing agent can be used generally in a proportion of about 2 to about 20 parts by weight, preferably about 2.5 to about 15 parts by weight, on the basis of 100 parts by weight of polyol-vulcanizable fluororubber. The polyol-based vulcanizing agent can be also used as a master batch with the fluororubber.

Moreover, as the vulcanization accelerator, quaternary onium salts such as quaternary phosphonium salts or quaternary ammonium salts are used. Preferably are quaternary phosphonium salts are used. The onium salt can be used in a proportion of about 0.5 to about 10 parts by weight, preferably about 1 to about 5 parts by weight, on the basis of 100 parts by weight of polyol-vulcanizable fluororubber. The vulcanization accelerator can be also used as a master batch with the fluororubber.

The quaternary phosphonium salts are compounds represented by the following general formula :

[PR₁R₂R₃R₄] ⁺X⁻

R₁ to R₄ : alkyl groups having 1-25 carbon atoms, alkoxyl groups, aryl groups, alkylaryl groups, aralkyl groups or polyoxyalkylene groups, two or three of which can form a heterocyclic group together with P
X : an anion such as Cl⁻, Br⁻, I⁻, HSO₄⁻, H₂PO₄⁻, RCOO⁻, ROSO₂⁻, CO₃²⁻
In particular, tetraphenylphosphonium chloride, benzyltriphenylphosphonium bromide, benzyltriphenylphosphonium chloride, triphenylmethoxymethylphosphonium chloride, triphenylmethylcarbonylmethylphosphonium chloride, triphenylethoxycarbonylmethylphosphonium chloride, trioctylbenzylphosphonium chloride, trioctylmethylphosphonium chloride, trioctylethylphosphonium acetate, tetraoctylphosphonium chloride, trioctylethylphosphonium dimethylphosphate, and the like are used. The quaternary phosphonium salts can be equimolar molecular compounds with active hydrogen-containing aromatic compounds such as polyhydroxyaromatic compounds.

The quaternary ammonium compounds are compounds represented by the following general formula :

[NR₁R₂R₃R₄] ⁺X⁻

(where R₁-R₄ and X⁻ are the same meanings as defined above) and include, for example, 1-alkylpyridinium salts, 5-aralkyl-1,5-diazabicyclo[4,3,0]-5-nonenium salts, 8-aralkyl-1,8- diazabicyclo[5,4,0]-7-undecenium salts, etc.

Examples of the organic peroxide include dicumyl peroxide, cumene hydroperoxide, p-methane hydroperoxide, 2,5-dimethylhexane-2,5-dihydroperoxide, di-tert-butyl peroxide, benzoyl peroxide, m-toluyl peroxide, 2,5-dimethyl-2,5-di(tert-butylperoxy)hexane, 2,5-dimethyl-2,5-di(tert-butylperoxy)hexyne-3, 1,3-di(tert-butylperoxyisopropyl)benzene, 2,5-dimethyl-2,5-dibenzoylperoxyhexane, (1,1,3,3-tetramethylbutylperoxy)2-ethylhexanoate, tert-butyl peroxybenzoate, tert-butyl peroxylaurate, di(tert-butylperoxy)adipate, di(2-ethoxyethylperoxy)dicarbonate, bis-(4-tert-butylcyclohexylperoxy)dicarbonate, and the like. Such an organic peroxide is used at a ratio of 0.5 to 10 parts by weight, preferably 1 to 5 parts by weight, based on 100 parts by weight of fluororubber.

For the peroxide crosslinking by organic peroxide, it is preferable to use a polyfunctional unsaturated compound in combination. Examples of such a polyfunctional unsaturated compound include tri(meth)allyl isocyanurate, tri(meth)allyl cyanurate, triallyl trimellitate, N,N'-m-phenylenebismaleimide, diallyl phthalate, tris(diallylamine)-s-triazine, triallyl phosphite, ethyleneglycol di(meth)acrylate, diethyleneglycol di(meth)acrylate, neopentylglycol di(meth)acrylate, trimethylolpropane tri(meth)acrylate, 1,3-polybutadiene, and the like. Such a polyfunctional unsaturated compound improves mechanical strength, compression set, etc. and is used at a ratio of about 0.1 to 20 parts by weight, preferably about 0.5 to 10 parts by weight, based on 100 parts by weight of fluororubber. Here, (meth)allyl refers to allyl or methallyl. Similarly, (meth)acrylate refers to acrylate or methacrylate.

Various compounding agents required for vulcanization operation, physical properties, and function are further added, if necessary, to the fluororubber composition comprising the above components. For example, a reinforcing agent such as carbon black, a filler such as diatomaceous earth or silica, an acid accepter such as an oxide or hydroxide of a divalent metal or hydrotalcite, and other necessary compounding agents are blended, and the resultant is kneaded by any kneading means using an open roll, kneader, etc., to prepare a composition. The composition is then subjected to heat pressing at 160 to 200°C for 3 to 30 minutes, and optionally to secondary vulcanization at 150 to 250°C for 0.5 to 24 hours. As a result, the composition is vulcanization-molded into a seal member.

### EXAMPLES

The following describes the present invention with reference to Examples.

### Example 1

| | |
|---|---|
| Fluororubber (P757, produced by Solvay Specialty Polymers Japan, specific gravity: 1.825-1.865) | 100 parts by weight |
| Triiron tetraoxide Fe₃O₄(BL-SP, produced by Titan Kogyo, Ltd.; BET specific surface area: 1.1 m²/g, specific gravity: 4.8-5.2) | 50 parts by weight |
| Austin Black (AUSTIN BLACK 325, produced by COAL FILLERS INC) | 5 parts by weight |
| Barium sulfate (Barium sulfate B-54, produced by Sakai Chemical Industry Co., Ltd.) | 1 part by weight |
| Acid acceptor (DHT-4A, produced by Kyowa Chemical Industry Co., Ltd.) | 3 parts by weight |
| Co-crosslinking agent (TAIC WH-60, produced by Nippon Kasei Co., Ltd.) | 2.4 parts by weight |
| Crosslinking agent (PERHEXA 25B-40, | 1.8 parts by weight |
| produced by NOF Corporation) | |

Among the above components, the components other than the crosslinking agent were kneaded by a closed type kneader, and then transferred to an open roll. After the crosslinking agent was added thereto and further kneaded, press cure was performed at 180°C for 6 minutes, and oven cure (secondary cure) was performed at 230°C for 22 hours, thereby obtaining a crosslinked product.

The normal state physical properties, metal detection confirmation: and compression set rate were measured using the obtained crosslinked product.
Normal state physical properties: according to JIS K6253, JIS K6251 corresponding to ISO 37
Metal detection confirmation: Detection was carried out on a 1 mm piece cut out from a vulcanizate using a metal detector ND-840, produced by Nissin Electronics Co., Ltd., with setting values of Fe 0.6 in diameter and SUS 1.5 in diameter.
   If it was detectable, this case was determined as ○, and if it was not detectable, this case was determined as ×.
Compression set: according to JIS K6262 corresponding to ISO 815-1, and the compression set was measured after 175°C at 70 hours
   A compression set of 21% or less was determined as ○, 22% or more was determined as ×.

### Example 2

In Example 1, the amount of triiron tetraoxide was changed to 40 parts by weight.

### Example 3

In Example 1, the amount of triiron tetraoxide was changed to 30 parts by weight.

### Example 4

In Example 1, as the triiron tetraoxide, the same amount (50 parts by weight) of triiron tetraoxide having a BET specific surface area of 2.1 m²/g (specific gravity: 5.2) was used.

### Comparative Example 1

In Example 1, the amount of triiron tetraoxide was changed to 20 parts by weight.

### Comparative Example 2

In Example 1, the amount of triiron tetraoxide was changed to 10 parts by weight.

### Comparative Example 3

In Example 1, as the triiron tetraoxide, the same amount (50 parts by weight) of triiron tetraoxide having a BET specific surface area of 4.5 m²/g (KN-320, produced by TODA KOGYO CORP.) was used.

### Comparative Example 4

In Example 1, as the triiron tetraoxide, the same amount (50 parts by weight) of triiron tetraoxide having a BET specific surface area of 5.5 m²/g (BL-10, produced by Titan Kogyo, Ltd.) was used.

### Comparative Example 5

In Example 1, as the triiron tetraoxide, the same amount (50 parts by weight) of triiron tetraoxide having a BET specific surface area of 7.0 m²/g (KN-370, produced by TODA KOGYO CORP.) was used.

### Comparative Example 6

In Example 1, the same amount (50 parts by weight) of diiron trioxide (Brown#601, produced by Resino color industry Co., ltd.) was used in place of the triiron tetraoxide.

### Comparative Example 7

In Example 1, the same amount (50 parts by weight) of strontium ferrite powder (SF-D630, produced by DOWA F-TEC CO., LTD.) was used in place of the triiron tetraoxide.

Following Table shows the results obtained in the above Examples and Comparative Examples, together with the metal filler volume fraction.

**Table**

| Measurement value | | | Example | | | | Comparative Example | | | | | | |
|---|---|---|---|---|---|---|---|---|---|---|---|---|---|
| | | | 1 | 2 | 3 | 4 | 1 | 2 | 3 | 4 | 5 | 6 | 7 |
| [Normal state physical properties] | | | | | | | | | | | | | |
| | Hardness | point | 70 | 68 | 66 | 70 | 64 | 62 | 71 | 70 | 70 | 74 | 69 |
| | 100% modulus | (MPa) | 3.09 | 2.81 | 2.39 | 3.52 | 2.03 | 1.77 | 3.84 | 3.63 | 3.63 | 3.80 | 3.48 |
| | Strength at break | (MPa) | 13.2 | 14.8 | 16.5 | 14.8 | 16 | 15.6 | 16.4 | 15.8 | 18.5 | 16.5 | 14.6 |
| | Elongation at break | (%) | 380 | 420 | 460 | 380 | 430 | 450 | 310 | 310 | 330 | 320 | 340 |
| | Specific gravity | | 2.25 | 2.19 | 2.10 | 2.27 | 2.02 | 1.93 | 2.27 | 2.26 | 2.25 | 2.24 | 2.28 |
| [Metal filler volume fraction] | | (vol%) | 13.8 | 11.4 | 8.8 | 13.4 | 6.1 | 3.1 | 13.4 | 13.9 | 13.2 | 13.2 | 13.7 |
| [Metal detection confirmation] | | Evaluation | ○ | ○ | ○ | ○ | × | × | ○ | ○ | ○ | × | × |
| [Compression set] | | (%) | 19 | 17 | 17 | 20 | 15 | 14 | 25 | 26 | 27 | 22 | 18 |
| | | Evaluation | ○ | ○ | ○ | ○ | ○ | ○ | × | × | × | × | ○ |

### INDUSTRIAL APPLICABILITY

A crosslinked product obtained by the fluororubber composition according to the present invention can be detected 1 mm pieces thereof by using a metal detector ND-840, produced by Nissin Electronics Co., Ltd., under the detection sensitivity conditions (Fe: 0.6 in diameter, SUS: 1.5 in diameter). Further, the compression set of the crosslinked product using an O-ring at 175°C after 70 hours is 21% or less, and thus the crosslinked product can be effectively used for gaskets, O-rings, and the like for food production facilities, food machinery, automobiles, etc.

## Claims

1. A fluororubber composition in which fluororubber is compounded with triiron tetraoxide having a BET specific surface area of 4.0 m²/g or less at a ratio of 7.0 vol% or more as a volume fraction.

2. The crosslinked product of the fluororubber composition according to claim 1.

3. The crosslinked product according to claim 2, which is a seal member.

4. The crosslinked product according to claim 3, which is used as a seal member of the food production facilities.
